# EUROPEAN PATENT SPECIFICATION

(11) **EP 1 738 956 B1**
(45) Date of publication and mention of the grant of the patent: **24.09.2008**
(21) Application number: 05014158.9
(22) Date of filing: 30.06.2005
(51) Int. Cl.: B60Q 1/076, B60Q 1/068

(54) **Adjusting device for head light system**
Einstellvorrichtung für ein Scheinwerfersystem
Dispositif de réglage d'un système de projecteur

(43) Date of publication of application: 03.01.2007
(73) Proprietor: TYC Brother Industrial Co., Ltd., Tainan (TW)
(72) Inventor: Kuo, Ming-Shan c/o TYC Brother Industrial Co.,Ltd., Tainan (TW); Chen, Wei-Jen c/o TYC Brother Industrial Co.,Ltd.,, Tainan (TW)
(74) Representative: Casalonga, Axel

(56) References cited:
- EP-A- 0 384 838
- DE-A1- 3 118 722
- GB-A- 2 089 958
- US-A1- 2005 088 852

## Description

The present invention relates to an adjusting device for a stably moving the activating rod linearly so as to adjust the light to obtain different illuminating positions of the head light.

A conventional head light assembly of vehicles generally includes a reflector with suitable curvature and two light bulbs are located at pre-set positions so as to provide high and low beam. The head light assembly is a fixed structure and the positions of the light bulbs cannot be adjusted so that the high beam and the low beam are not adjustable. This conventional head light assembly includes an inherent shortcoming which is that the light beam is always set to illuminate the area in front of the vehicle, so that when the vehicles are located on a downward hill (for example), the body of the vehicle is orientated downward and the head light assembly fixed to the body of vehicle illuminates the area that is not the direction that the driver needs to see. The driver want to see the road conditions ahead of a larger area, but the head light assembly can only provide an illumination for a limited area because the inclination of the vehicle body. This could lead to a dangerous result. Such a conventional head light assembly is known from US-A-2005/0 088 852.
The present invention intends to provide an adjusting device which can be operated electrically or manually and moves the light in a desired direction.

The present invention relates to an adjusting device for head light assembly and the device comprises an activation rod having a spherical head at a first end thereof to be connected with an adjusting member of the light bulb and a hole with an inner threaded periphery is defined axially in a second end of the activation rod. A frame fixed to a vehicle body has a guiding passage defined therethrough and the second end of the activation rod is movably inserted in the guiding passage. A motor fixed to the frame has an output shaft which is fixed to a driving rod in the guiding passage of the frame. The driving rod has an outer threaded periphery so as to be rotatably engaged with the inner threaded periphery of the activation rod. By activating the motor, the activation rod moves linearly by the engagement of the outer threaded periphery of the driving rod and the inner threaded periphery of the activation rod.
The present invention will become more obvious from the following description when taken in connection with the accompanying drawings which show, for purposes of illustration only, a preferred embodiment in accordance with the present invention.
Fig. 1 is an exploded view to show the adjusting device of the present invention;
Fig. 2 is a perspective view to show the adjusting device of the present invention wherein an adjusting ring is connected thereto;
Fig. 3 is a perspective view to show the adjusting device of the present invention without the adjusting ring;
Fig. 4 shows a cross sectional view of the adjusting device of the present invention;
Fig. 5 is an exploded view to show another embodiment of the adjusting device of the present invention, and
Fig. 6 shows a cross sectional view of the adjusting device of the present invention as disclosed in Fig. 5.

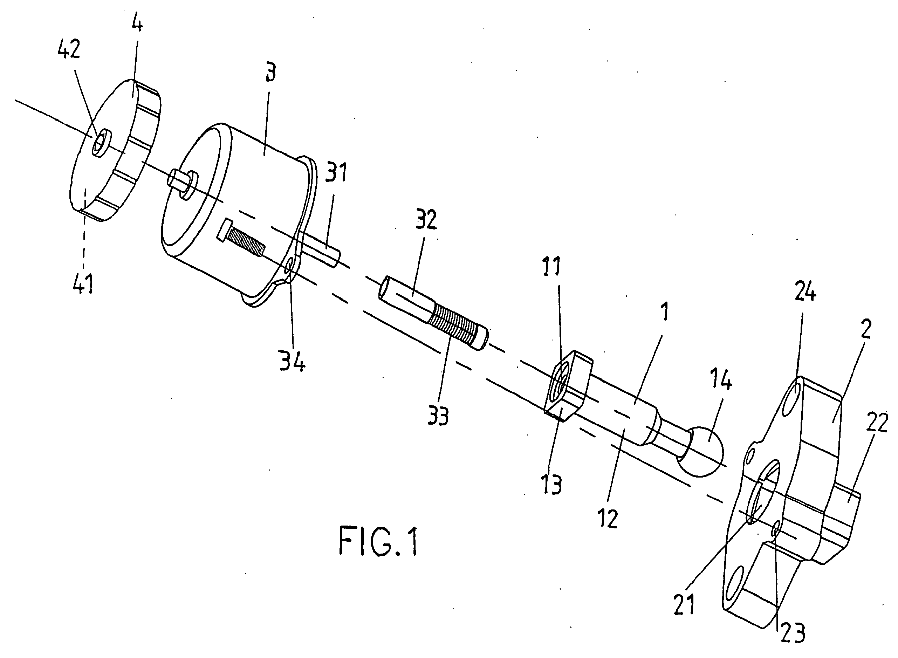

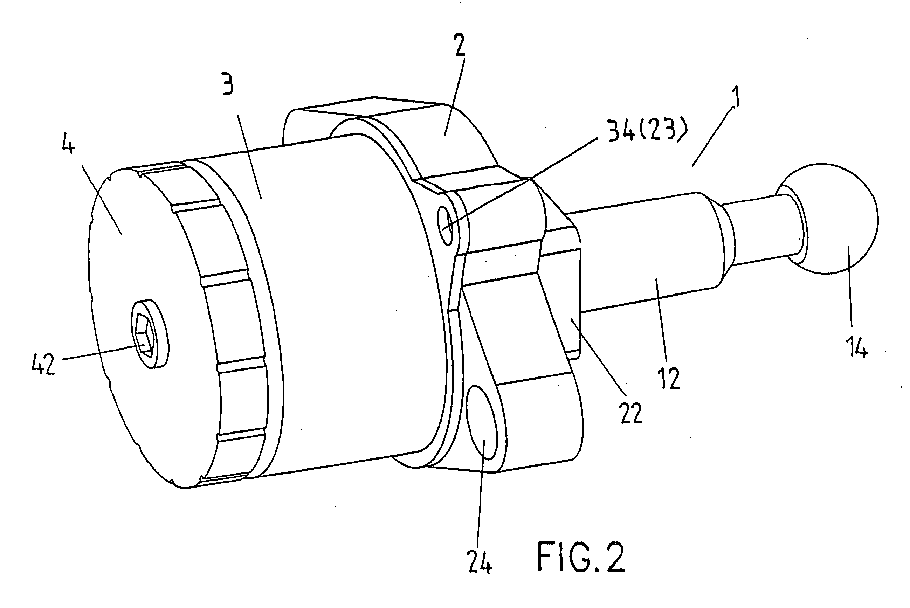

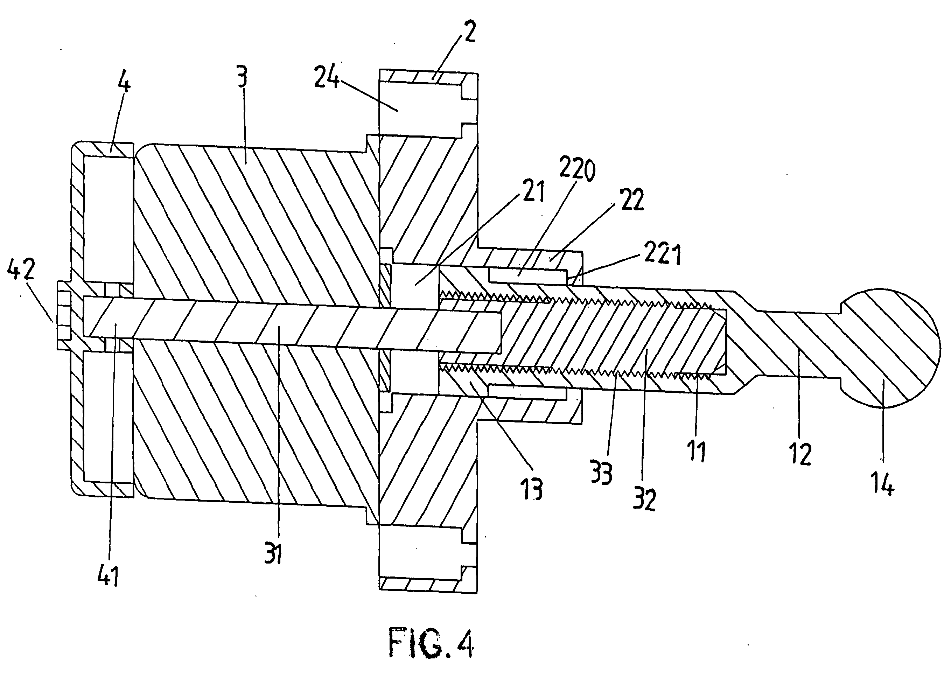

Referring to Figs. 1, 2 and 4, the adjusting device for head light assembly of the present invention comprises an activation rod 1 which is a tubular rod 12 with a spherical head 14 at a first end thereof so as to be connected to an adjusting member of light bulb (not shown), and a hole with an inner threaded periphery 11 is defined axially in a second end of the activation rod 1. A rectangular flange 13 extends radially outward from the second end of the activation rod 1. A frame 2 includes two holes 24 so as to secure the frame 2 to vehicle body and a guiding passage 21 is defined through the frame 2. A rectangular protrusion 22 extends from one side of the frame 2 and an opening 220 is defined in the rectangular protrusion 22. The opening 220 communicates with the guiding passage 21. When assembling, the first end of the activation rod 1 is inserted into the guiding passage 21 and through the opening 220, such that the second end together with the rectangular flange 13 of the activation rod 1 is movably engaged with the opening 220 of the rectangular protrusion 22. A stop flange 221 extends inward from a periphery of the opening 220 of the rectangular protrusion 22 so as to prevent the rectangular flange 13 of the activation rod 1 from dropping out from the opening 220.

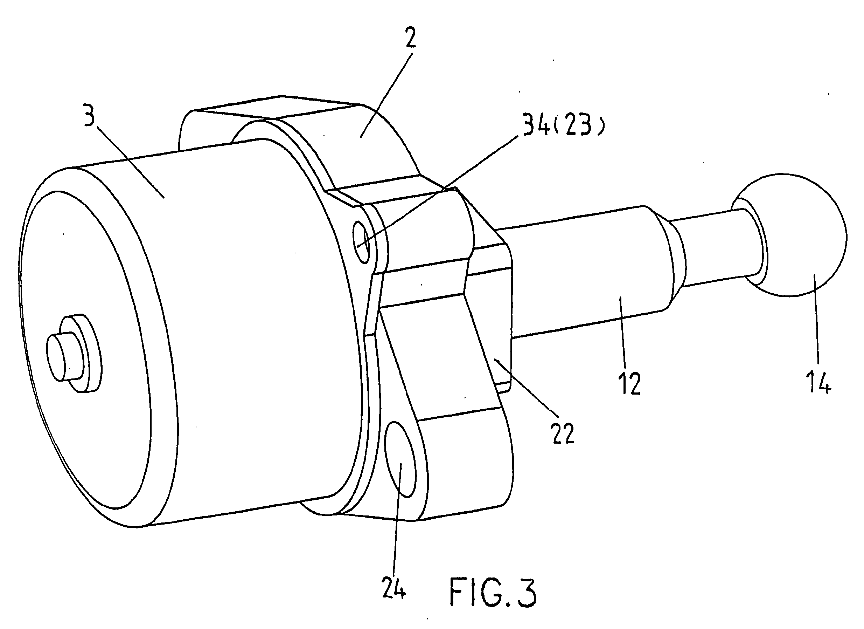

A motor 3 is fixed to the frame 2 by extending bolts through two holes 34 defined through the flanges extending from the motor 3 and connected with the connection holes 23 in the frame 2. An output shaft 31 extends from a first end and a second end of the motor 3.
A driving rod 32 has a first end extending through the guiding passage 21 of the frame 2 and is fixed to the output shaft 31 on the first end of the motor 3. The driving rod 32 has an outer threaded periphery 33 which is rotatably engaged with the inner threaded periphery 11 of the activation rod 1. An adjusting ring 4 has an engaging hole 41 defined therethrough so as to be securely mounted to the output shaft 31 on the second end of the motor 3. A neck portion extends from the adjusting ring 4 and encloses the engaging hole 41, the neck portion includes a polygonal inner periphery 42.
When the motor 3 is activated, the driving rod 32 is rotated by the rotation of the output shaft 31 and the activation rod 1 is moved linearly by the engagement of the outer threaded periphery 33 of the driving rod 32 and the inner threaded periphery 11 of the activation rod 1. By this way, the position of the light bulb can be adjusted. The adjustment can also be made by manual way, the user may rotate the adjusting ring 4 by hand to rotate the output shaft 31, or by engaging a tool (not shown) with the polygonal inner periphery 42 to achieve the same adjustment purposes. As shown in Fig. 3, the device can be duly operated by electric power without the adjusting ring 4.

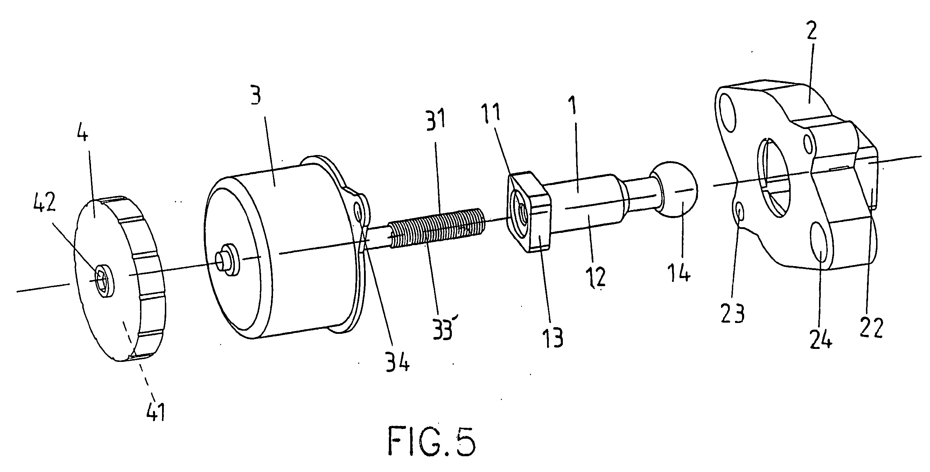

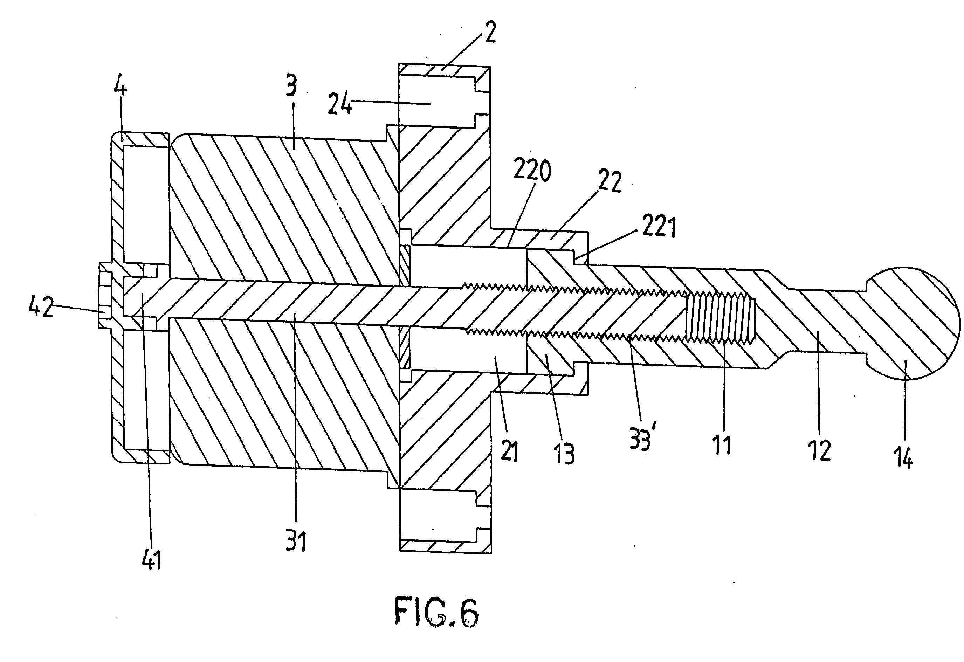

Figs. 5 and 6 show another embodiment of the adjusting device of the present invention, wherein the driving rod 32 is integrally connected with the output shaft 31 on the first end of the motor 3. That is to say, the output shaft 31 includes an outer threaded periphery 33' which is engaged with the inner threaded periphery 11 of the activation rod 1.
While we have shown and described the embodiment in accordance with the present invention, it should be clear to those skilled in the art that further embodiments may be made without departing from the scope of the present invention, as defined by the appended claims.

## Claims

1. An adjusting device for head light assembly, comprising:
an activation rod (1) having a spherical head (14) at a first end thereof and a hole with an inner threaded periphery (11) defined axially in a second end of the activation rod (1);
a frame (2) having a guiding passage (21) defined therethrough and adapted to be fixed to a vehicle body, the second end of the activation rod (1) movably inserted in the guiding passage (21);
a motor (3) fixed to the frame (2) and having an output shaft (31) extending from a first end thereof, and
a driving rod (32) having a first end extending through the guiding passage (21) of the frame (2) and being fixed to the output shaft (31) of the motor (3), the driving rod (32) having an outer threaded periphery (33) which is rotatably engaged with the inner threaded periphery (11) of the activation rod (1).

2. The device as claimed in claim 1, wherein the frame (2) has a rectangular protrusion (22) extending from one side thereof and an opening (220) is defined in the rectangular protrusion (22), the opening (220) communicating with the guiding passage (21), a rectangular flange (13) extends radially outward from the second end of the activation rod (1) and is movably engaged with the opening (220) of the rectangular protrusion (22), a stop flange extends inward from a periphery of the opening (220) of the rectangular protrusion (22) so as to prevent the rectangular flange (13) of the activation rod (1) from dropping out from the opening (220).

3. The device as claimed in claim 1, wherein the output shaft (31) has one end extending from a second end of the motor (3) and an adjusting ring (4) is securely mounted to the output shaft (31) on the second end of the motor (3).

4. The device as claimed in claim 1, wherein two flanges extend from the motor (3) and each flange has a hole (34), the frame (2) includes two connection holes (23) so that the motor (3) is fixed to the frame (2) by extending bolts through the holes (34) of the flanges and connected with the connection holes (23) in the frame (2).

5. The device as claimed in claim 1, wherein the driving rod (32) is integrally connected with the output shaft (31) on the first end of the motor (3).

6. The device as claimed in claim 3, wherein the adjusting ring (4) has an engaging hole (41) defined therethrough so as to be securely mounted to the output shaft (31) on the second end of the motor (3), a neck portion extends from the adjusting ring (4) and encloses the engaging hole (41), the neck portion includes a polygonal inner periphery.

## Patentansprüche

1. Einstellvorrichtung für eine Scheinwerferanordnung, umfassend:
eine Betätigungsstange (1), welche einen sphärischen Kopf (14) an einem ersten Ende davon und ein Loch mit einem mit einem Gewinde versehenen Innenumfang (11), welches in Axialrichtung in einem zweiten Ende der Betätigungsstange (1) definiert ist, aufweist;
ein Fassungsgestell (2), welches einen Führungsdurchgang (21) aufweist, welcher in Verlauf dadurch definiert ist, und zur Befestigung an einer Fahrzeugkarosserie geeignet ist, wobei das zweite Ende der Betätigungsstange (1) beweglich in dem Führungsdurchgang (21) eingeschoben ist;
einen Motor (3), welcher an dem Fassungsgestell (2) befestigt ist und eine Abtriebswelle (31) aufweist, welche von einem ersten Ende davon ausgeht, und
eine Antriebsstange (32), welche ein erstes Ende aufweist, welches durch den Führungsdurchgang (21) des Fassungsgestells (2) verläuft und an der Abtriebswelle (31) des Motors (3) befestigt ist, wobei die Antriebsstange (32) einen mit einem Gewinde versehenen Außenumfang (33) aufweist, welcher sich drehbar in Eingriff mit dem mit einem Gewinde versehenen Innenumfang (11) der Betätigungsstange (1) befindet.

2. Vorrichtung nach Anspruch 1, wobei das Fassungsgestell (2) einen rechteckigen Vorsprung (22) aufweist, welcher von einer Seite davon ausgeht, und eine Öffnung (220) in dem rechteckigen Vorsprung (22) definiert ist, wobei die Öffnung (220) mit dem Führungsdurchgang (21) verbunden ist, ein rechteckiger Flansch (13) von dem zweiten Ende der Betätigungsstange (1) ausgehend in Radialrichtung nach außen verläuft und sich beweglich in Eingriff mit der Öffnung (220) des rechteckigen Vorsprungs (22) befindet und ein Sperrflansch von einem Umfang der Öffnung (220) des rechteckigen Vorsprungs (22) ausgehend nach innen verläuft, um zu verhindern, daß der rechteckige Flansch (13) der Betätigungsstange (1) aus der Öffnung (220) fällt.

3. Vorrichtung nach Anspruch 1, wobei die Abtriebswelle (31) ein Ende aufweist, welches von einem zweiten Ende des Motors (3) ausgeht, und ein Einstellring (4) an dem zweiten Ende des Motors (3) sicher an der Abtriebswelle (31) angebracht ist.

4. Vorrichtung nach Anspruch 1, wobei zwei Flansche von dem Motor (3) ausgehen und jeder Flansch ein Loche (34) aufweist, wobei das Fassungsgestell (2) zwei Verbindungslöcher (23) umfaßt, so daß der Motor (3) durch Bolzen, welche durch die Löcher (34) der Flansche verlaufen und mit den Verbindungslöchern (23) in dem Fassungsgestell (2) verbunden sind, an dem Rahmen (2) befestigt ist.

5. Vorrichtung nach Anspruch 1, wobei die Antriebsstange (32) in einstückiger Weise mit der Abtriebswelle (31) an dem ersten Ende des Motors (3) verbunden ist.

6. Vorrichtung nach Anspruch 3, wobei der Einstellring (4) ein Eingriffsloch (41), welches in Verlauf dadurch definiert ist, zur sicheren Befestigung an der Abtriebswelle (31) an dem zweiten Ende des Motors (3) aufweist, wobei ein Halsabschnitt von dem Einstellring (4) ausgeht und das Eingriffsloch (41) umschließt, wobei der Halsabschnitt einen polygonalen Innenumfang umfaßt.

## Revendications

1. Dispositif d'ajustement pour ensemble de phare, comprenant :
une tige d'actionnement (1) ayant une tête sphérique (14) à une première extrémité et un trou pourvu d'une périphérie intérieure filetée (11) défini axialement dans une deuxième extrémité de la tige d'actionnement (1) ;
un boîtier (2) comportant un conduit de guidage (21) défini à travers celui-ci et adapté pour être fixé sur une carrosserie de véhicule, la deuxième extrémité de la tige d'actionnement (1) étant insérée de façon mobile dans le conduit de guidage (21) ;
un moteur (3) fixé au boîtier (2) et ayant un arbre de sortie (31) s'étendant depuis une première extrémité de celui-ci, et
une tige d'entraînement (32) ayant une première extrémité s'étendant dans le conduit de guidage (21) du boîtier (2) et fixée à l'arbre de sortie (31) du moteur (3), la tige d'entraînement (32) ayant une périphérie extérieure filetée (33) qui est en prise à rotation avec la périphérie intérieure filetée (11) de la tige d'actionnement (1).

2. Dispositif selon la revendication 1, dans lequel le boîtier (2) comporte une protubérance rectangulaire (22) s'étendant depuis un de ses côtés et une ouverture (220) est définie dans la protubérance rectangulaire (22), l'ouverture (220) communiquant avec le conduit de guidage (21), une bride rectangulaire (13) s'étend radialement vers l'extérieur depuis la deuxième extrémité de la tige d'actionnement (1) et est engagée de façon mobile dans l'ouverture (220) de la protubérance rectangulaire (22), une bride d'arrêt s'étend vers l'intérieur depuis une périphérie de l'ouverture (220) de la protubérance rectangulaire (22) afin d'empêcher la bride rectangulaire (13) de la tige d'actionnement (1) de sortir de l'ouverture (220).

3. Dispositif selon la revendication 1, dans lequel l'arbre de sortie (31) a une extrémité s'étendant depuis une deuxième extrémité du moteur (3) et une bague d'ajustement (4) est montée de manière solide sur l'arbre de sortie (31) sur la deuxième extrémité du moteur (3).

4. Dispositif selon la revendication 1, dans lequel deux brides s'étendent depuis le moteur (3) et chaque bride comporte un trou (34), le boîtier (2) comprend deux trous de connexion (23) de sorte que le moteur (3) est fixé au boîtier (2) par l'intermédiaire de boulons qui s'étendent dans les trous (34) des brides et connectés aux trous de connexion (23) prévus dans le boîtier (2).

5. Dispositif selon la revendication 1, dans lequel la tige d'entraînement (32) est connectée d'un seul tenant à l'arbre de sortie (31) sur la première extrémité du moteur (3).

6. Dispositif selon la revendication 3, dans lequel la bague d'ajustement (4) comporte un trou de fixation (41) défini à travers celle-ci pour permettre de la monter solidement sur l'arbre de sortie (31) sur la deuxième extrémité du moteur (3), une partie de col s'étendant depuis la bague d'ajustement (4) et renfermant le trou de fixation (41), la partie de col comprenant une périphérie intérieure polygonale.
